# EUROPEAN PATENT SPECIFICATION

(11) **EP 0 494 662 B1**
(45) Date of publication and mention of the grant of the patent: **14.08.1996**
(21) Application number: 92100254.9
(22) Date of filing: 09.01.1992
(51) Int. Cl.: B66F 9/075, B60K 11/06, B60K 13/02

(54) **Fork-lift truck**
Gabelhubwagen
Elévateur à fourche

(30) Priority: 10.01.1991 JP 13886/91
(43) Date of publication of application: 15.07.1992
(73) Proprietor: Kabushiki Kaisha Toyoda Jidoshokki Seisakusho, Aichi-ken 448 (JP)
(72) Inventor: Miki, Osamu, c/o K.K. Toyoda Jidoshokki Seisakusho, Kariya-shi, Aichi-ken (JP)
(74) Representative: Tiedtke, Harro, Dipl.-Ing.

(56) References cited:
- DE-A- 2 931 704
- DE-A- 2 934 095
- FR-A- 1 454 351
- US-A- 2 114 156
- US-A- 4 744 432

## Description

The present invention relates to a fork-lift truck according to the preamble of claim 1.

### Description of the Related Art

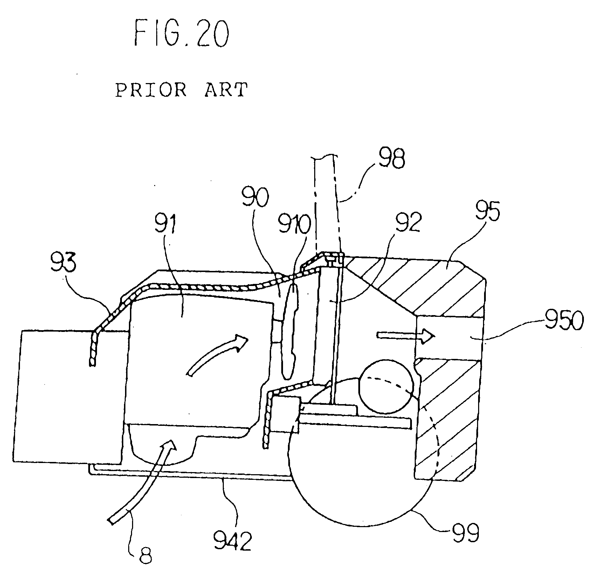

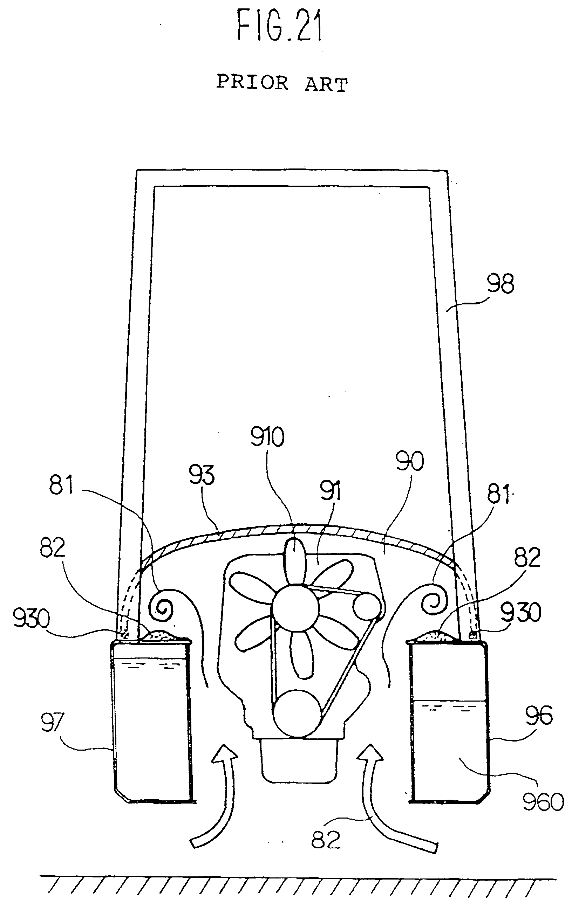

Conventional fork-lift trucks are so constructed to have an engine compartment 90 for housing an engine 91, a radiator 92, and the like as shown in FIGUREs 20 and 21.

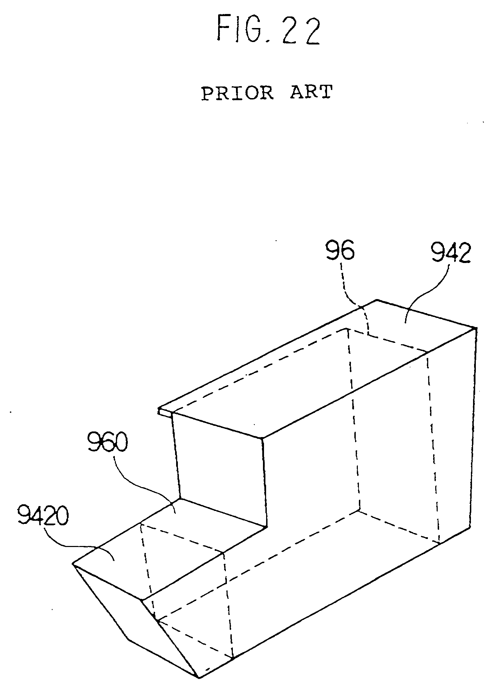

The conventional engine compartment 90 of a fork-lift truck is open at its bottom. An oil tank 96 and a fuel tank 97 are disposed at opposite sides of the engine compartment 90, so as to enclose the engine compartment 90. As FIGURE 22 shows, since an open step 9420 is formed in the frame 942 of a vehicle body side, the oil tank 96 has a notch which defines a recessed area 960 serving as a portion of the open step 9420.

As FIGUREs 20 and 21 show, a hood 93 covers over the upper part of the engine compartment 90. The frame 942 and a weight 95 cover the front and rear parts of the engine compartment 90, respectively.

As FIGURE 20 shows, the weight 95 is provided with an exhaust port 950 through which outside air 8 introduced at the bottom into the engine compartment 90 is exhausted rearward. The flow of the outside air 8 is caused by a cooling fan 910 which is rotatably mounted to the engine 91, resulting in cooling the radiator 92, and the like.

Reference numeral 99 in FIGURE 20 designates a rear wheel of the fork-lift truck. Reference numeral 930 in FIGURE 21 designates a noise-proof seal. Reference numeral 98 in FIGUREs 20 and 21 designates a head guard which is integrally formed with a frame of the oil tank 96, and the like.
The oil tank 96 is filled with working fluid 960 for power transmission for cargo working operations of the fork-lift truck.

In the aforementioned engine compartment of the conventional fork-lift truck, the oil tank 96 cannot be sufficiently cooled. The bottom part of the engine compartment 90 is conventionally left open to introduce the outside air 8 through the bottom for cooling the radiator. Overheating of the working fluid 960 has occurred in this type of fork-lift truck. Additional oil coolers can be provided to cope with this problem of overheating, however, that adds to the cost of the truck. The pipe arrangement has to be elongated for such additional oil coolers, resulting in increasing flow resistance and causing other troubles.

Since the fork-lift truck is so constructed to introduce the outside air 8 from the bottom part of the engine compartment 90 as FIGURE 21 shows, a vortex 81 is likely to occur over the oil tank 96 and the fuel tank 97. This will promote the accumulation dust 82 such as the sand taken from the ground, on upper surfaces of both tanks 96 and 97. Moreover, noise easily leaks from the bottom part of the engine compartment 90.

According to the document US-A-2 114 156 which discloses the preamble of claim 1, there is disclosed a generic fork-lift truck comprising a noise-proof bottom plate for shielding a bottom part of the engine compartment. On said noise-proof bottom plate an oil tank is supported within the engine compartment, the side wall of which is provided with louvers. By means of a cooling fan interposed within the engine compartment air can be drawn through the louvers to the upper side of the oil tank.

The further document DE-A-2 934 095 describes a vehicle comprising an engine compartment at the side wall of which an oil tank is attached. At the opposite side of the engine compartment, there are provided air openings through which air can be drawn in a direction along a side of said oil tank.

It is an object of the present invention to provide an engine compartment of a fork-lift truck with means for sufficiently cooling an oil tank with a flow of the outside air, requiring no further oil cooler, and for preventing dust from entering therein and for limiting noise.

This object is achieved by means of the combination of the features defined in claim 1. Preferable embodiments of the invention are defined in the subclaims.

In the following the invention is further illustrated by embodiments with reference to the enclosed figures.

FIGURE 1 is a sectional rear elevational view of an engine compartment of the fork-lift truck in Embodiment 1 along with a line I-I of FIGURE 3.

FIGURE 2 is a perspective view of an oil tank of the fork-lift truck in Embodiment 1.

FIGURE 3 is a side elevational view of the fork-lift truck in Embodiment 1.

FIGURE 4 is a sectional rear elevational view of a detail of the engine compartment in Embodiment 2.

FIGURE 5 is a rear elevational view of a detail of the engine compartment in Embodiment 3.

FIGURE 6 is a rear elevational view of a detail of the engine compartment in Embodiment 4.

FIGURE 7 is a graph showing the relation between transmission loss (TL) and frequency in Embodiment 4.

FIGURE 8 is a sectional view of a detail of the engine compartment in Embodiment 5.

FIGURE 9 is a sectional view of a detail of the engine compartment in Embodiment 6.

FIGURE 10 is a perspective view of a detail of the body panel and the oil tank in Embodiment 6.

FIGURE 11 is a perspective view of a detail of the body panel and the oil tank in Embodiment 7.

FIGURE 12 is a side elevational view of a detail of the body panel and the oil tank in Embodiment 8.

FIGURE 13 is a perspective view of a detail of the body panel and the oil tank in Embodiment 9.

FIGURE 14 is a perspective view of a detail of the oil tank in Embodiment 9.

FIGURE 15 is a sectional view of a detail of the engine compartment in Embodiment 10.

FIGURE 16 is a side elevational view of a detail of the body panel and the oil tank in Embodiment 10.

FIGURE 17 is a perspective view of a detail of the body panel and the oil tank in Embodiment 11.

FIGURE 18 is a sectional view of a detail of the engine compartment in Embodiment 12.

FIGURE 19 is a sectional view of a detail of the engine compartment in Embodiment 13.

FIGURE 20 is a sectional side elevational view of an engine compartment of a conventional fork-lift truck.

FIGURE 21 is a sectional rear elevational view of the engine compartment of the conventional fork-lift truck.

FIGURE 22 is a perspective view of the oil tank of the conventional fork-lift truck.

The most salient feature of the present invention is to substantially seal the engine compartment by shielding the bottom part thereof with a noise-proof bottom plate so as to take in the outside air from the truck body side through an intake port, and then to introduce the air into the engine compartment through an air passage along the wall surface of the oil tank.

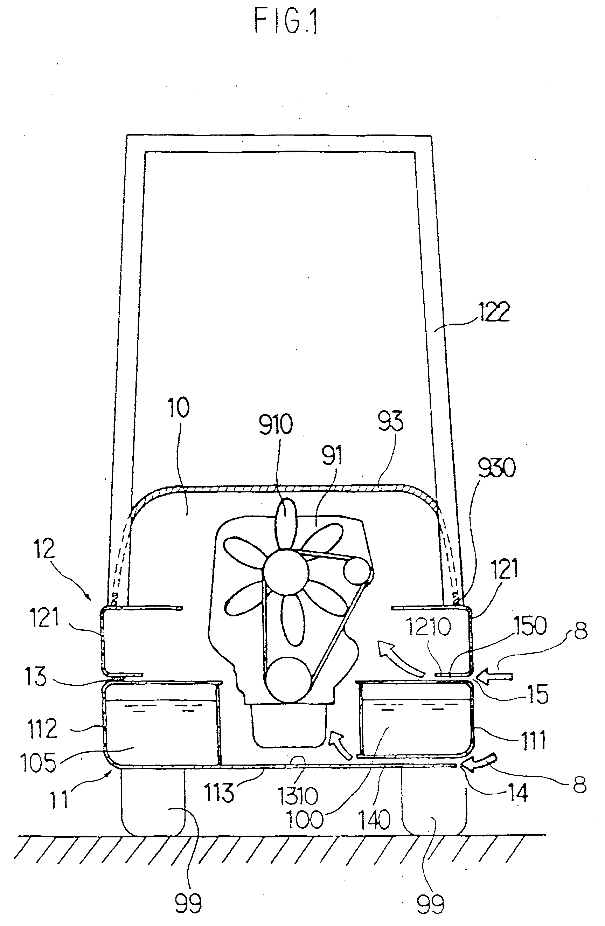

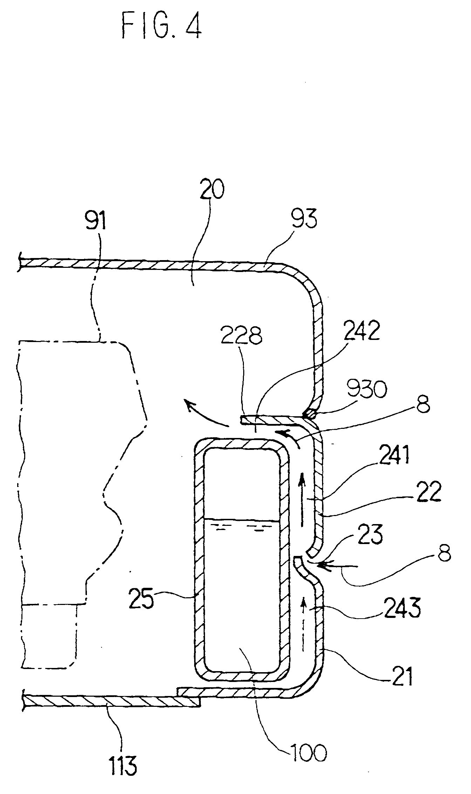

The air passage may be formed along the upper and lower wall surfaces of the oil tank by providing intake ports at those places, as FIGURE 1 shows. Alternatively the air passage may be formed between the oil tank and a cover for covering the outer side of the oil tank as FIGURE 4 shows.

It is preferable to form the oil tank to be horizontally elongated instead of vertically elongated. This will eliminate the necessity for providing the recessed part to form an open step, resulting in increasing the tank capacity.

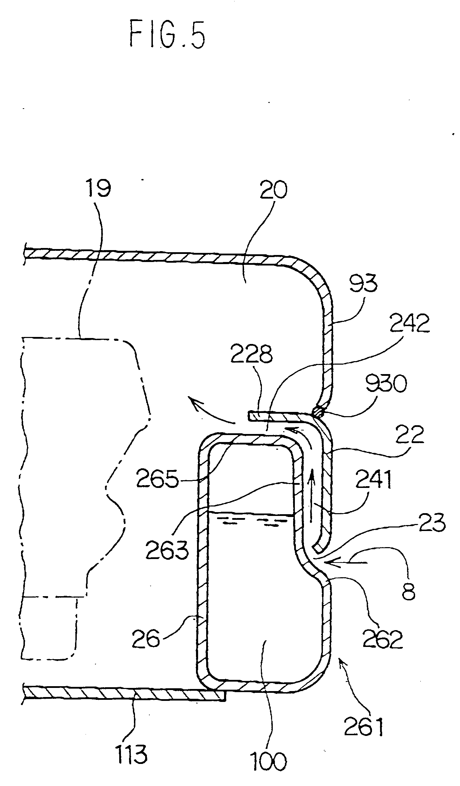

The side wall of the oil tank preferably forms a part of the vehicle body frame as FIGUREs 1 and 5 show, by which the effect for cooling the oil tank is further improved.

The air passage is preferably formed between the wall surface of the oil tank and the body panel. The body panel is preferably formed to be corrugated, by which the noise from the engine compartment is further reduced.

The body panel is preferably formed of a synthetic resin, by which vibration proofness of the body panel, and color variation (freedom in coloring) are improved.

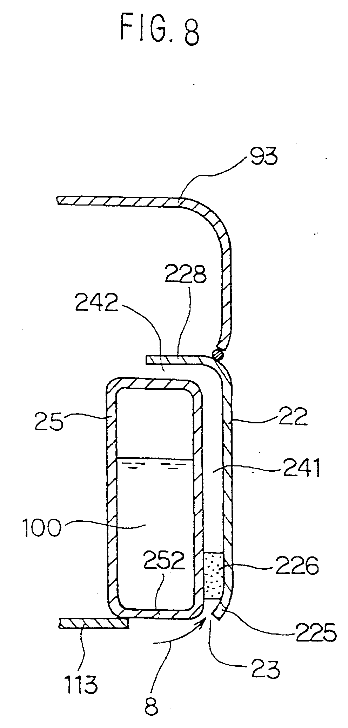

As FIGURE 8 shows, the body panel may be elongated downwardly to the lower part of the oil tank along the side wall surface thereof. This improves the effect for cooling the oil tank due to elongated air passage between the body panel and the oil tank.

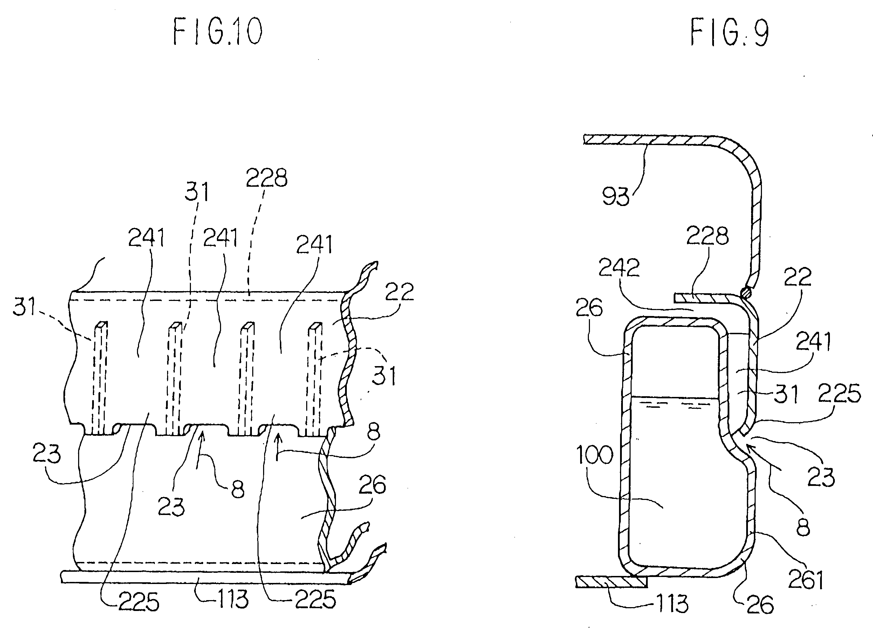

A plurality of partitions may be provided within a back surface of the body panel which faces the oil tank, by which the air passage is formed between the partitions, oil tank, and the body panel as FIGUREs 9 and 10 show. By this the air passage is divided into many parts to cool the side wall of the oil tank uniformly.

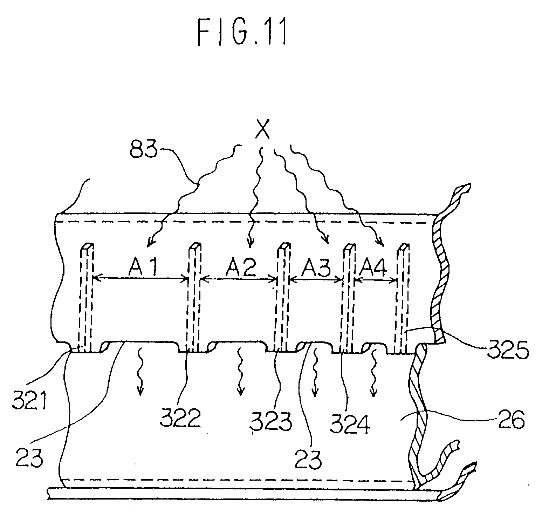

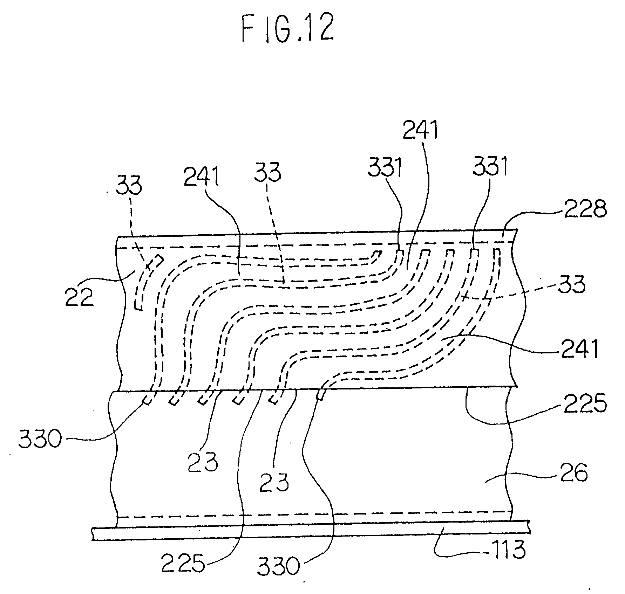

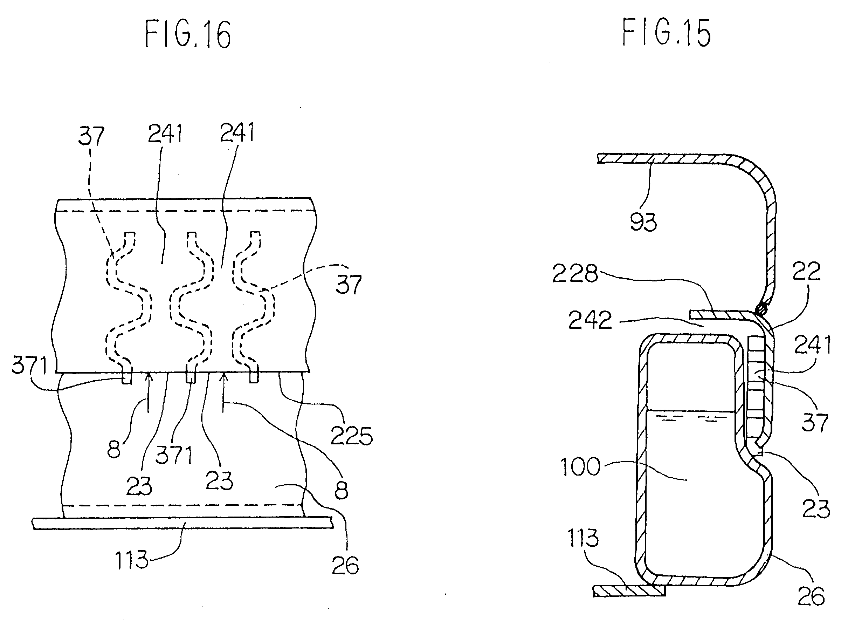

The width (port width) between partition may be varied in order to further improve the noise eliminating effect as FIGURE 11 shows. The partitions may be formed to be curved or corrugated to further enhance the effect for cooling the oil tank as FIGUREs 12 and 16 show.

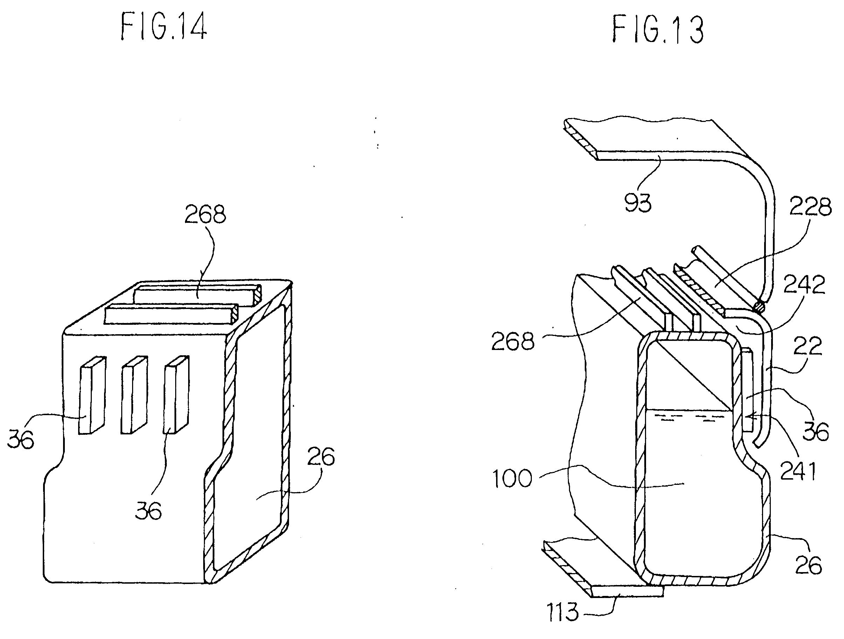

The partitions may be disposed on the side wall of the oil tank facing the body panel as FIGUREs 13 and 14 show. Since the partitions are fixed in direct contact with the side wall surface of the oil tank, the effect of cooling is further increased. A cooling fin may be disposed on the top wall surface of the oil tank, by which cooling effect is encreased.

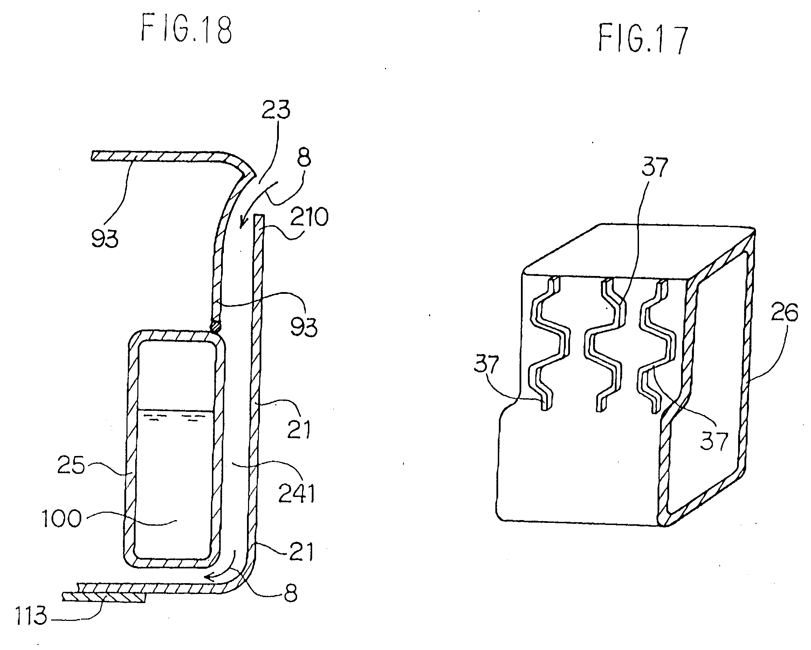

A frame may be so extended that its lower end is engaged with the noise-proof bottom plate to close the engine compartment bottom, and so that the frame's top end reaches the side surface of the engine hood. The air passages are thus formed between the frame and the side wall surface of the oil tank, and the frame and the bottom of the oil tank. As FIGURE 18 shows, an intake port communicating with those air passages is provided between the top end of the frame and the engine hood. Since the air passage is made longer, the cooling of the oil tank is further improved.

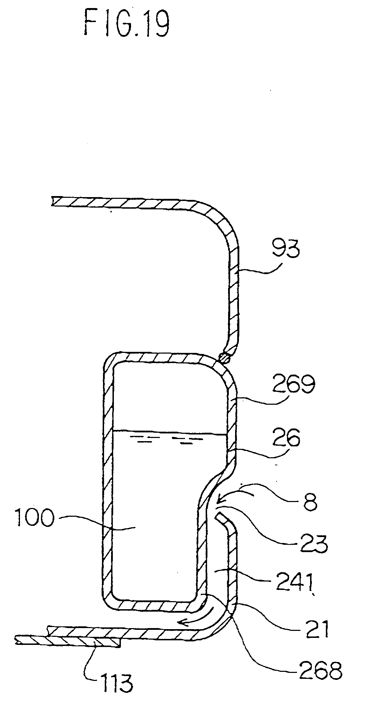

As FIGURE 19 shows, a frame can be provided along the bottom and lower parts of the side wall surface to form the air passage therebetween. The lower end of the frame is so engaged with the noise-proof bottom plate as to close the engine compartment bottom.

The noise-proof bottom plate is disposed under the engine compartment. The air passage may be formed between the noise-proof bottom plate and the oil tank, by which the effect of cooling the oil tank is further improved. It is preferable to provide a noise absorbing member within the inner surface of the noise-proof bottom plate.

In the present invention, when starting the engine of the fork-lift truck, the air is taken through the intake port, then introduced into the engine compartment through the air passage along the wall surface of the oil tank.

In the course of such introduction, the introduced air will take heat away from the wall surface of the oil tank to be cooled. Since the air is introduced from the truck body side, dust is prevented from entering into the engine compartment. Moreover the bottom part of the engine compartment is shielded with a noise-proof bottom plate, which prevents noise leakage.

The present invention, thus, provides an engine compartment of a fork-lift truck wherein the oil tank is sufficiently cooled, and dust and noise are prevented from entering and leaking, respectively.

### Embodiment 1

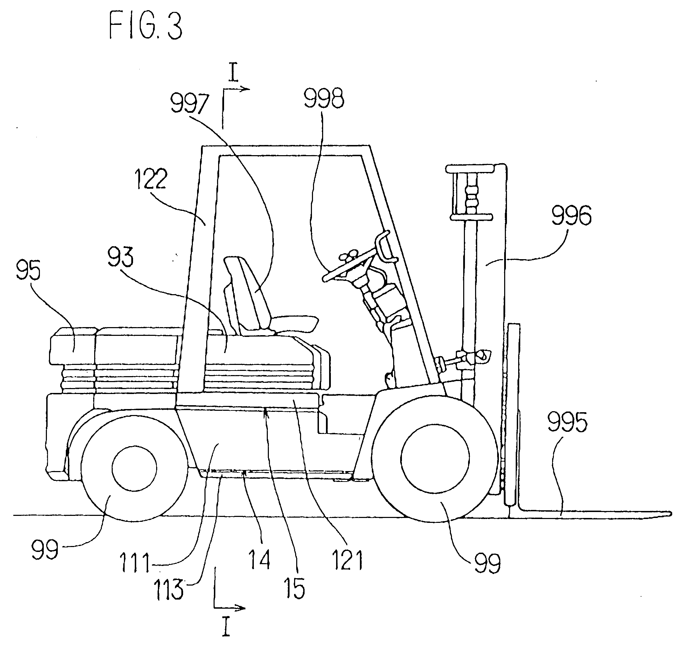

A first embodiment of the engine compartment of the fork-lift truck in the present invention will be described with reference to FIGUREs 1 and 3.

An engine compartment 10 of this embodiment is shielded at its bottom by means of a noise-proof bottom plate 113. Air passages 140 and 150 are formed so as to reach the engine compartment 10 along a wall surface of an oil tank 111 between intake ports 14 and 15 formed in the body side and the engine compartment 10. The fork-lift truck of this embodiment comprises a frame 11 and a body 12 mounting rubber therewith for vibration-proofness to the operator. The frame 11 comprises the oil tank 111, fuel tank 112, and the like. The oil tank is welded to the rear frame. The body 12 comprises a body panel 121, a head guard 122 intergrally formed therewith. The body panel 121 houses the battery, and hydraulic piping therein.

The noise-proof bottom plate 113 is integrally formed with the bottom plate of the fuel tank 112 and extends transversely across the vehicle body. The engine compartment 10 is substantially sealed by means of the noise-proof bottom plate 113 and other structure.

The intake port 14 is formed between the noise-proof bottom plate 113 and the oil tank 111. The intake port 15 is formed between upper wall surface of the oil tank 111 and the body panel 121.

The air passage 140 is formed between the noise-proof bottom plate 113 and the oil tank 111. The air passage 150 is formed between the oil tank 111 and a lower wall surface 1210 of the body panel 121.

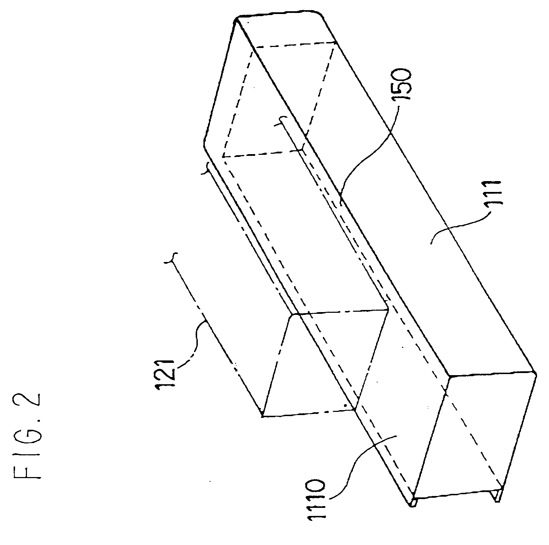

The oil tank 111 is so formed to be horizontally elongated with uniform cross section as FIGURE 2 shows. An open step 1110 is formed on the upper wall surface of the oil tank 111.

In FIGURE 3 showing a side elevational view of the fork-lift truck, under the engine hood 93, intake ports 15 and 14 are formed between the body panel 121 and the oil tank 111, and the oil tank 111 and the noise-proof bottom plate 113, respectively. Reference numerals 995, 996, 997, 998 and 95 of FIGURE 3 designate a fork, a lifting mast, a driver's seat, a steering wheel, and a weight, respectively.

Reference numerals 100, 105, and 13 in FIGURE 1 designate working fluid, fuel, and a seal member, respectively. Other constructions are the same as those of the prior art.

When starting the engine 91, the flow of the outside air by which the radiator is cooled is forced to be generated by a cooling fan 910.

At this time, the outside air 8 is admitted through the intake ports 14 and 15 formed below and above the oil tank 111 as FIGURE 1 shows. Then the air 8 is introduced through the air passages 140 and 150 formed below and above the wall surfaces of the oil tank 111 into the engine compartment 10. The introduced air 8 will remove heat from the lower and upper wall surfaces of the oil tank 111 to be smoothly cooled. Accordingly the working fluid in the oil tank 111 is sufficiently cooled, which keeps working fluid from overheating. The clearance between the fuel tank 112 and the body panel 121 is sealed by means of the seal member 13 to increase the amount of the air admitted from the side of the oil tank 111, resulting in cooling the oil tank 111 more efficiently.

The bottom part of the engine compartment 10 is closed with the noise-proof bottom plate 113 to admit the outside air 8 only from the body side through the respective intake ports 14 and 15. This will prevent the dust on the ground from entering into the engine compartment 10. Since the engine compartment 10 is substantially sealed by means of the noise-proof bottom plate 113, the noise will not leak easily.

When the oil tank 10 is formed to be horizontally elongated with uniform cross section, as FIGURE 2 shows, the recessed portion of the oil tank for the open step in the conventional fork-lift truck is not necessary as FIGURE 9 shows, resulting in increasing the tank capacity. Additionally the center of gravity of the oil tank is lowered, the fork-lift truck becomes more stable.

### Embodiment 2

An engine compartment of the second embodiment will be described with reference to FIGURE 4.

In an engine compartment 20, an oil tank 25 is spaced and separated from a frame. Both a frame 21 and a body panel 22 are provided outside the oil tank 25. Air passages 241 and 242 are formed between the side wall of the oil tank 25 and the body panel 242.

The frame 21 as a lower cover is disposed around the bottom and side parts of the vertically elongated oil tank 25. The lower end of the frame 21 is bonded to the noise-proof bottom plate 113 in Embodiment 1, substantially sealing the engine compartment 20.

The top end of the frame 21 is bent toward the oil tank 25, forming a gentle curve.

A body panel 22 as an upper cover is provided over the oil tank 25 with a clearance formed therebetween. An intake port 23 is formed between the lower end of the body panel 22 and the top end of the frame 21. The top end 228 of the body panel 22 is bent toward the inside of the engine compartment along the top surface of the oil tank 25. The air passage 241 is formed between the side wall surface of the oil tank 25 and inner wall surface of the body panel 22. The air passage 242 is formed between the top wall surface of the oil tank 25 and top end 228 of the panel 22.

The other component parts of Embodiment 2 are the same as those in Embodiment 1.

Since the engine compartment 20 of this embodiment is constructed as described above, after being admitted through the intake port 23, the outside air 8 is introduced into the engine compartment 20 through the air passages 241 and 242. At this time, the outside air 8 will remove heat from the side and top wall surfaces of the oil tank 25 to be cooled. The outside air 8 is forced to flow upwardly from the intake port 23 and introduced into the engine compartment through the air passage 243 formed between the oil tank 25 and the frame 21. The air in the air passage 243 is admitted to flow through the air passage 241, resulting in cooling the bottom part of the oil tank 25.

As aforementioned, the outside air 8 removes heat from side and top wall surfaces of the oil tank 25, resulting in increasing cooling effect, as well as providing the beneficial effects as in Embodiment 1.

In this embodiment, the intake port 23 is formed at a location half way up the height of the oil tank 25 from its bottom. However, the port 23 need not necessarily be formed at this position. The lower the position of the intake port 23, the higher the cooling effect that is obtained.

A plurality of intake ports may be provided.

### Embodiment 3

As FIGURE 5 shows, an engine compartment of this embodiment uses an oil tank 26 partially forming the frame 21 of a vehicle body, instead of the oil tank 25 of Embodiment 2.

An outer side wall 261 of the oil tank 26 partially forms the frame 21. Otherwise the components are the same as those of Embodiment 2.

The outer side wall 261 of the oil tank 26 is so formed to have its right lower half, comprising a part of the vehicle body frame.

The oil tank 26 is partially exposed to the outside, by which the effect for cooling the working fluid 100 is further improved compared with Embodiment 2. Air passages 241 and 242 are continuously formed between upper side wall 263 and top wall surface 265 of the oil tank, and the body panel 22, respectively. A center part 262 of the side wall 263 of the oil tank 26 is formed as a gentle streamline, enabling the outside air 8 to smoothly enter into the air passage 241 through the intake port 23, by which cooling effect is improved.

The body panel 22 is formed of a synthetic resin, such as fiber reinforced plastics (FRP) and nylon (polyamide resin), which facilitates vibration proofness and color variation of the body panel 22. Improving the quality of the body panel 22 provides an excellent appearance. The body panel 22 may be easily mounted and dismounted.

This embodiment further improves the effect of cooling the oil tank 25, as well as vibration proofness, color variation, and appearance of the body panel 22. Also, the same effects as in Embodiment 2 can be obtained.

### Embodiment 4

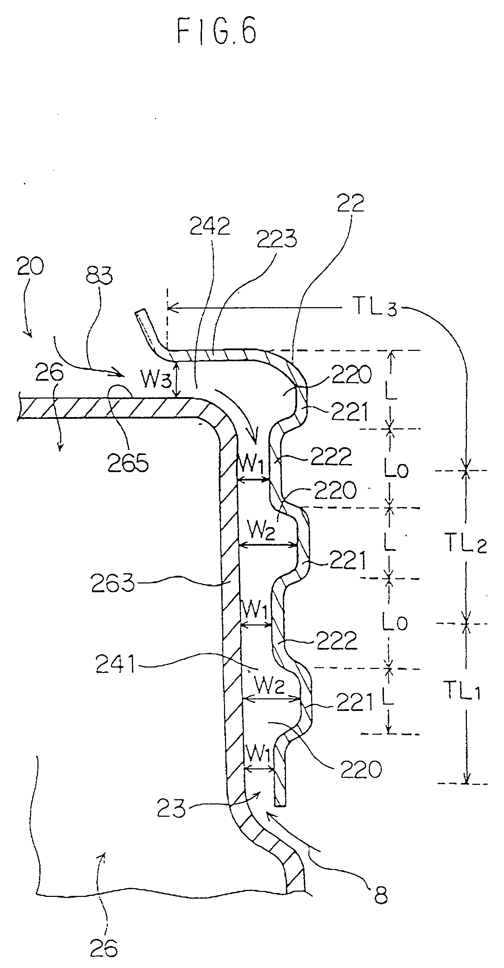

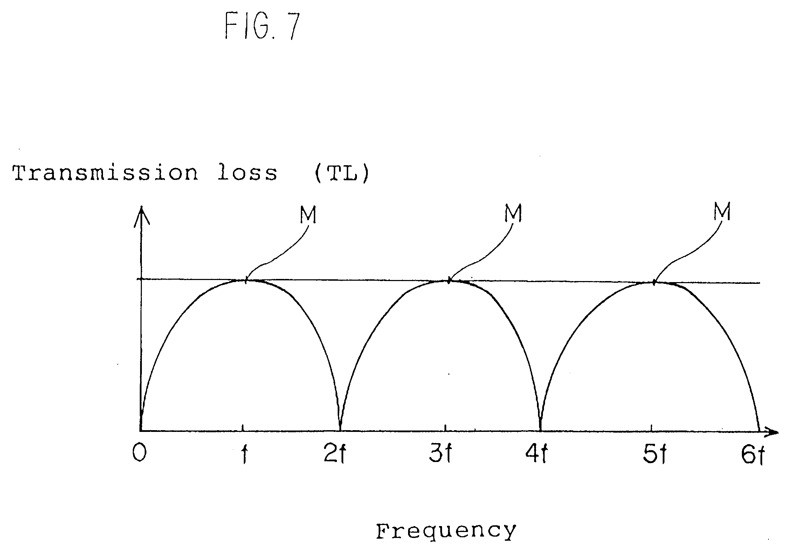

As FIGUREs 6 and 7 show, an engine compartment of this embodiment uses a body panel 22 having corrugations instead of using the generally flat body panel 22 of Embodiment 3. An air passage 241 is formed between upper side wall 263 of the oil tank 26 and the body panel 22. Otherwise the structure is like that of Embodiment 3.

The body panel 22 comprises a plurality of projections 221 inwardly forming recessed parts 220, and flat parts 222 formed between those projections 221.

The projection 221 has a width L. A clearance W2 is defined between a side wall 263 of the oil tank 26 and the projection 221.

The flat part 222 has a width L_{O}. A clearance W1 is defined between a side wall 261 of the oil tank 26 and the flat part 222. A clearance W3 is defined between a head 262 of the oil tank 262 and a top end 223 of the body panel 22. The width of W3 is the same as that of W1. Each clearance W1 and W2 has a long depth along the oil tank 26 and the body panel 22.

Since the body panel 22 is corrugated, it provides a noise suppressing effect for suppressing the noise out of the engine compartment 20 expressed by the following equation;
${\text{Transmission loss TL1 = 10 Log 10 [1+(m-1/m)}}^{\text{2}} {\text{/4xsin}}^{\text{2}} \text{kR]}$ where$\text{m = S1/S2 = (W2/W1)x(W2'/W1') = W2/W1.}$

In the above equitation, m, S, W1, W2 designate an expansion ratio, sectional area, and clearance, respectively. Each reference character W1' and W2' designates the depth of W1 and W2 which is uniformly and sufficiently long enough.
The reference character k is expressed by:$\text{k = 2 f/c,}$ where c designates the sound speed (m/s). The reference character f is expressed by $\text{f = c/4L}$. The transmission loss reaches maximum at 3f, 5f. The above equations apply if $\text{f = 1.22 x c/(W2xW2')}$ or less.

In case of L_{O} > L in FIGURE 6, the respective transmission losses TL2 and TL3 may be expressed similarly, resulting in $\text{TL1 = TL2 = TL3}$. The total transmission loss is expressed by:
${\text{TLT = 3 x 10 Log 10[1+(m-1/m)}}^{\text{2}} {\text{/4xsin}}^{\text{2}} \text{kL].}$ For example, in case of the expansion ratio $\text{m = W2/W1 = 2-3}$, it leads to $\text{TLmax = (1 - 1.5) x W2/W1}$.

FIGURE 7 shows TLmax, i.e., the maximum value M of the transmission loss TL.

As this FIGURE shows, at the maximum value point M, the noise out of the engine is suppressed to minimum, resulting in maximum noise suppressing effect. The noise of the engine becomes larger particularly in the range from 500 to 2000 Hz.

The greatest transmission loss is obtained from the noise wave 83 at specific frequency. The maximum value M is obtained by multiplying the frequency by the odd number. The transmission loss in the vicinity of the maximum value M may provide an excellent noise suppressing effect. Accordingly designing the clearance W1, W2 and the width L, L_{O} according to the type of engine in use may provide an excellent noise suppressing effect.

Since the body panel 22 is corrugated, the noise wave 83 out of the engine compartment 20 is sufficiently suppressed, resulting in further reducing the noise leaking out of the engine compartment 20. At the same time, the outside air 8 for cooling can be smoothly admitted into the engine compartment through the air passages 241 and 242 in the same way as in Embodiment 3. This embodiment, thus, produces a larger reduction in amount of the noise that leaks out of the engine compartment 20 compared with Embodiment 3. The same beneficial effects as those of Embodiment 3 can be obtained.

### Embodiment 5

As FIGURE 8 shows, this embodiment uses a body panel 22 with its lower end extending to the level around the bottom of the oil tank 25 in the engine compartment of Embodiment 2 (FIGURE 4). An intake port 23 is formed between a lower end 225 of the body panel 22 and a side surface of a bottom 252 of the oil tank 25. Air passages 241 and 242 are formed between the oil tank 25 and the body panel 22. A dust proof filter 226 is disposed in the lower part of the air passage 241 to extend transversely across the truck body side.

The bottom 252 of the oil tank 25 is exposed to the outside between the body panel 22 and the noise-proof bottom plate 113. Other components of this embodiment are the same as those of Embodiment 2. In this embodiment, the air passages 241 and 242 are extended, resulting in a high cooling effect on the oil tank 25, as well as the same effects as in Embodiment 2.

### Embodiment 6

As FIGUREs 9 and 10 show, in the engine compartment of Embodiment 3 (FIGURE 5), a plurality of partitions 31 are provided between the body panel 22 and the oil tank 26, and the air passage 241 is formed between the respective partitions 31.

As FIGURE 10 shows, an intake port 23 is formed between the lower end surface 225 of the body panel 22 and each partition 31. The partition 31 is welded to be fixed to the body panel 22. Other structural components are the same as in Embodiment 3.

In this embodiment, the outside air 8 is admitted from the intake port 23 to flow upwardly through the air passage 241 along the partition 31. Since the intake port 23 and the air passage 241 are divided into a plurality of parts, the admitted outside air 8 is uniformly in contact with the wall surface of the oil tank 26. The effect of cooling of the oil tank 26 can be improved, and otherwise the same effects as in Embodiment 3 are obtained.

### Embodiment 7

As FIGURE 11 shows, in this embodiment, the interval formed between successive partition, i.e., port width, of Embodiment 6 (FIGUREs 9, 10) is varied. Partitions 321, 322, 323, 324 and 325 are so arranged as to have the respective port width A1, A2, A3, and A4 successively. Those partitions 321 to 325 have different port width according to the frequency of the noise wave 83 leaking out of the engine compartment. For example, large port width A1 functions in suppressing the noise wave 83 at low frequency, such as 1 kHz or lower, and small port width A4 functions in suppressing the noise wave 83 at high frequency such as 1 kHz or higher.

The port width of each partition 321 to 325 is varied responsive to the frequency of the noise wave 83 caused by the engine in use. Other structural members are the same as those of Embodiment 6. This embodiment provides an excellent effect of suppressing the noise out of the engine compartment as well as the same beneficial effects as in Embodiment 6.

### Embodiment 8

As FIGURE 12 shows, a plurality of partitions like those of Embodiment 6 (FIGUREs 9, 10) but curved, are provided. These partitions are welded so as to be fixed to the inner side surface of the body panel 22. The lower end 330 of each partition 33 extends downwardly below the lower end surface 225 of the body panel 22. The upper ends 331 of all of the partitions 33 approach each other in the upper right direction at regular intervals.

An air passage 241 is formed between the respective partitions 33 that are provided partially along the horizontal dimension of the oil tank 26. Other structural components are the same as those of Embodiment 6.

In this embodiment, the air passge 241 is provided in horizontal direction with respect to the oil tank 26, resulting in longer air passage than that of Embodiment 6.

Accordingly this embodiment provides for further excellent cooling effect compared with Embodiment 6. Since the lower end 330 of the partition 33 projects below the lower end surface 225 of the body panel 22, the outside air is easily admitted. The curved partitions 33 facilitate the noise suppressing function. The partitions 33 are fixedly welded to the inner side surface of the body panel 22 over a wide area resulting in reinforcing the body panel 22. The same beneficial effects as in Embodiment 6 can be obtained.

### Embodiment 9

As FIGUREs 13 and 14 show, in this embodiment, partitions are provided on the oil tank 26 of Embodiment 6 (FIGUREs 9, 10), and a radiation fin is provided on the top surface of the oil tank 26.

The partitions 36 of this embodiment are fixedly welded to the oil tank 26 at regular intervals (FIGURE 14). An intake port 241 is formed between the respective partitions 36 and the oil tank 26, and the body panel 22. A plurality of upstanding radiation fins 268 are welded to the top surface of the oil tank 26.

A plurality of partitions 36 are welded to the wall surface of the oil tank 26 as plates for radiation, facilitating radiation of heat from the oil tank 26. The radiation fin 268 welded to the top surface of the oil tank 26 further facilitates radiation. The same beneficial effects as in Embodiment 6 can also be obtained.

### Embodiment 10

As FIGUREs 15 and 16 show, the partitions in Embodiment 6 (FIGUREs 9, 10) are corrugated. A plurality of corrugated partitions 37 are welded to the inner side surface of the body panel 22. The respective air passages 241 are formed between the partitions 37. The lower end 371 of each partition 37 projects downwardly to below the lower end surface 225 of the body panel 22.

In this embodiment, the partitions 37 are corrugated, by which an excellent effect of suppressing the noise out of the engine compartment can be obtained (see Embodiment 4). The same beneficial effects as in Embodiment 6 can also be obtained.

### Embodiment 11

As FIGURE 17 shows, the corrugated partitions 37 in Embodiment 10 are fixedly welded to the side of the oil tank 26. Other structural members are the same as those of Embodiment 10.

This embodiment provides the same effects as in Embodiment 10. The partitions 37 are welded to the oil tank 26, facilitating further the heat radiation cooling effect thereof.

### Embodiment 12

As FIGURE 18 shows, the frame 21 of Embodiment 2 (FIGURE 4) is extended upwardly along the side of the oil tank 25. An intake port 23 is formed between a top end 210 of the frame 21 and the side surface of the engine hood 93. An air passage 241 is formed between the frame 21 and the oil tank 25. The body panel is not used in this embodiment.

The outside air 8 is admitted into the air passage 241 through the intake port 23, then introduced into the engine compartment. In the course of such introduction, the outside air 8 cools side and bottom parts of the oil tank 25. In this embodiment, the air passage 241 is elongated, resulting in an excellent effect of the air for cooling the oil tank 25. Since the intake port 23 is formed at upper position, dust on the ground is kept from entering and clear air is admitted. The same effects beneficial as in Embodiment 2 can also be obtained.

### Embodiment 13

As FIGURE 19 shows, the shape of the oil tank 26 of Embodiment 3 is turned upside down. An upper side wall 269 of the oil tank 26 projects out to partially form the frame. In this embodiment, the frame 21 is disposed along the lower side wall 268 of the oil tank 26. An intake port 23 and an air passage 241 are formed between the frame 21 and the lower side wall 268. The upper part of the oil tank 26 is in contact with the engine hood 93. The body panel is not used in this embodiment. The same effects beneficial as in Embodiment 3 can be obtained.

While the invention has been described with reference to embodiments, it is to be understood that modifications or variations may be easily made by a person of ordinary skill in the art without departing from the scope of this invention which is defined by the appended claims.

An engine compartment of a fork-lift truck has a noise-proof bottom plate for shielding the compartment bottom, intake air ports for admitting the outside air, and air passages formed between those intake ports and the engine compartment through which the outside air is introduced into the engine compartment along a wall surface of the oil tank. The admitted air will remove heat from the wall surface of the oil tank in the course of such introduction, by which the tank is sufficiently cooled. The air is introduced through the intake ports formed in the side of the truck body, preventing entrance of dust from the ground. The noise-proof bottom plate serves to prevent noise from leaking.

## Claims

1. A fork-lift truck with an engine compartment (10, 20) which is arranged within a body frame (11, 21) and in which an oil tank (111, 25, 26) is accomodated at a side thereof, said engine compartment (10, 20) comprising:
an intake port (14, 15) formed in said body side for admitting outside air,
an air passage (150, 241) formed between said intake port (14, 15, 23) and said engine compartment (10, 20) through which the outside air is fed into said engine compartment (10, 20), wherein an inner wall surface of said air passage (150, 241) is formed by an outer wall surface of said oil tank (111, 25, 26), and
a noise-proof bottom plate (113) for shielding a bottom part of said engine compartment (10, 20),
**characterized in that** said noise-proof bottom plate (113) extends to reach around a side wall of said oil tank (111, 25, 26) along a bottom part thereof to form a further air passage (140) therebetween; and/or
a side wall of said oil tank (111, 25, 26) which is not provided for forming an inner wall surface of said air passages (140, 150, 241) forms a part of said body frame (11, 21), and is exposed to the outside air.

2. A fork-lift truck according to claim 1, wherein a body panel (121) is provided above said oil tank (111) along a truck body side surface to form said air passage (150) between a lower end surface of said body panel and said oil tank.

3. A fork-lift truck according to claim 1, wherein said oil tank (25) is housed within said frame (21) and a body panel (22) provided along a side of said body frame, and said intake port (23) is formed between said body panel and frame, communicating with said air passage (241) formed between said body panel and said oil tank.

4. A fork-lift truck according to claim 1, wherein a body panel (22) is provided along a side wall of said oil tank (25) to form said air passage (241) therebetween.

5. A fork-lift truck according to claim 4, wherein said body panel (22) is formed corrugated in the vertical direction to provide recess (220) and projection (221) parts.

6. A fork-lift truck according to claim 4, wherein said body panel (22) extends to reach around a lower end of a side wall of said oil tank (25).

7. A fork-lift truck according to claim 4, wherein a plurality of partitions (31, 33) are fixed to a back surface of said body panel (22) facing a side wall of said oil tank to form said air passage (241) between said partition, body panel, and oil tank.

8. A fork-lift truck according to claim 7, wherein said partitions are arranged so that port widths (A1-A4) defined between adjacent partitions (31) are different.

9. A fork-lift truck according to claim 7, wherein said partitions (33) are curved and are partially aligned with said body frame in a longitudinal direction.

10. A fork-lift truck according to claim 7, wherein said partitions (33) are corrugated.

11. A fork-lift truck according to claim 4, wherein a plurality of partitions (36; 37) are fixed to a side wall of said oil tank facing said body panel (22) to form said air passage therebetween.

12. A fork-lift truck according to claim 11, wherein said partitions (36) are arranged so that port widths defined between adjacent partitions are mutually different.

13. A fork-lift truck according to claim 11, wherein said partitions (37) are curved and partially aligned with said vehicle body frame in a longitudinal direction.

14. A fork-lift truck according to claim 11, wherein said partitions (37) are curved.

15. A fork-lift truck according to claim 1, wherein said body frame (21) is extended over a height of said oil tank (25) with a lower frame and engaged with said noise-proof bottom plate (113) to shield a bottom of said engine compartment and with a top end of said frame extending to reach a side wall of an engine hood (93) housing said engine compartment, said intake port (23) being formed between said engine hood and said frame, and said air passages being formed between a side wall and a bottom of said oil tank and said frame.

16. A fork-lift truck according to claim 1, wherein said body frame (21) is provided along a bottom and a side wall of said oil tank (25) with a lower frame end engaged with said noise-proof bottom plate (113) to shield a bottom of said engine compartment, said intake port (23) being formed between a side wall of top end of said frame and a side wall (268) of said oil tank, and air passages being formed between said side and bottom of said oil tank and said frame.

17. A fork-lift truck according to claim 1, wherein said noise-proof bottom plate (113) is fixed to said oil tank (25) to shield a bottom part of said engine compartment.

18. A fork-lift truck according to claim 2, wherein a top wall surface of said body panel (121) is in contact with an engine hood (93).

19. A fork-lift truck according to claim 1, wherein a cooling fin (268) is fixed to said oil tank (26).

## Patentansprüche

1. Gabelstapler mit einem Motorraum (10, 20), der innerhalb eines Karosserie-Rahmens (11, 21) angeordnet ist, und in dem ein Öl-Behälter (111, 25, 26) an einer seiner Seiten aufgenommen ist, wobei der Motorraum (10, 20) umfaßt:
eine Einlaß-Öffnung (14, 15), die an der Karosserie-Seite gebildet ist, um Umgebungsluft einzulassen,
eine Luft-Durchführung (150, 241), die zwischen der Einlaß-Öffnung (14, 15, 23) und dem Motorraum (10, 20) gebildet ist, durch die Umgebungsluft in den Motorraum (10, 20) geführt wird, wobei eine innere Wandfläche der Luft-Durchführung (150, 241) durch eine äußere Wandfläche des Öl-Behälters (110, 25, 26) gebildet ist, und
eine Schallschutz-Bodenplatte (113), um einen unteren Teil des Motorraums (10, 20) abzudecken,
dadurch gekennzeichnet, daß sich die Schallschutz-Bodenplatte (113) so erstreckt, daß sie um eine seitliche Wand des Öl-Behälters (111, 25, 26) entlang eines unteren Teils von ihm reicht, um eine weitere Luft-Durchführung (140) dazwischen zu bilden; und/oder
daß eine seitliche Wand des Öl-Behälters (111, 25, 26), die nicht dazu vorgesehen ist, eine innere Wandfläche der Luft-Durchführungen (140, 150, 241) zu bilden, einen Teil des Karosserie-Rahmens (11, 21) bildet, und der Umgebungsluft ausgesetzt ist.

2. Gabelstapler nach Anspruch 1, wobei eine Karosserie-Platte (121) oberhalb des Öl-Behälters (111) entlang einer Karosserie-Seitenfläche des Staplers vorgesehen ist, um die Luft-Durchführung (150) zwischen einer oberen Stirnfläche der Karosserie-Platte und dem Öl-Behälter zu bilden.

3. Gabelstapler nach Anspruch 1, wobei der Öl-Behälter (25) innerhalb des Rahmens (21) aufgenommen ist, und wobei eine Karosserie-Platte (22) entlang einer Seite des Karosserie-Rahmens vorgesehen ist, und wobei die Einlaß-Öffnung (23) zwischen der Karosserie-Platte und dem Rahmen gebildet ist, und zwar in Verbindung mit der Luft-Durchführung (241), die zwischen der Karosserie-Platte und dem Öl-Behälter gebildet ist.

4. Gabelstapler nach Anspruch 1, wobei die Karosserie-Platte (22) entlang einer seitlichen Wand des Öl-Behälters (25) vorgesehen ist, um die Luft-Durchführung (241) zwischen ihnen zu bilden.

5. Gabelstapler nach Anspruch 4, wobei die Karosserie-Platte (22) in der vertikalen Richtung gewellt ausgebildet ist, um zurückspringende (220) und vorstehende (221) Teile zu ergeben.

6. Gabelstapler nach Anspruch 4, wobei sich die Karosserie-Platte (22) so erstreckt, daß sie etwa ein unteres Ende der seitlichen Wand des Öl-Behälters (25) erreicht.

7. Gabelstapler nach Anspruch 4, wobei eine Mehrzahl von Unterteilungen (31, 33) an einer hinteren Fläche der Karosserie-Platte (22) befestigt ist, die einer seitlichen Wand des Öl-Behälters gegenüberliegt, um die Luft-Durchführung (241) zwischen der Unterteilung der Karosserie-Platte und dem Öl-Behälter zu bilden.

8. Gabelstapler nach Anspruch 7, wobei die Unterteilungen so angeordnet sind, daß Öffnungs-Breiten (A1 - A4), die zwischen benachbarten Unterteilungen (31) definiert sind, unterschiedlich sind.

9. Gabelstapler nach Anspruch 7, wobei die Unterteilungen (33) gekrümmt sind und teilweise mit dem Karosserie-Rahmen in einer Längsrichtung ausgerichtet sind.

10. Gabelstapler nach Anspruch 7, wobei die Unterteilungen (33) gewellt sind.

11. Gabelstapler nach Anspruch 4, wobei eine Mehrzahl von Unterteilungen (36; 37) an einer seitlichen Wand des Öl-Behälters befestigt sind, die der Karosserie-Platte (22) gegenüber liegt, um die Luft-Durchführung zwischen ihnen zu bilden.

12. Gabelstapler nach Anspruch 11, wobei die Unterteilungen (36) so angeordnet sind, daß die Öffnungs-Breiten, die zwischen benachbarten Unterteilungen gebildet sind, unterschiedlich zueinander sind.

13. Gabelstapler nach Anspruch 11, wobei die Unterteilungen (37) gekrümmt und teilweise mit dem Fahrzeug-Karosserie-Rahmen in einer Längsrichtung ausgerichtet sind.

14. Gabelstapler nach Anspruch 11, wobei die Unterteilungen (37) gekrümmt sind.

15. Gabelstapler nach Anspruch 1, wobei der Karosserie-Rahmen (21) sich über eine Höhe des Öl-Behälters (25) mit einem unteren Rahmen erstreckt, und mit der Schallschutz-Bodenplatte (113) in Eingriff steht, um eine Unterseite des Motorraums mit einem oberen Ende des Rahmens abzudecken, der sich so erstreckt, daß er eine seitliche Wand der Motorhaube (93) erreicht, die den Motorraum einschließt, wobei die Einlaß-Öffnung (23) zwischen der Motorhaube und dem Rahmen gebildet ist, und wobei die Luft-Durchführungen zwischen einer seitlichen Wand und einer unteren Seite des Öl-Behälters und dem Rahmen gebildet sind.

16. Gabelstapler nach Anspruch 1, wobei der Karosserie-Rahmen (21) entlang einer unteren und einer seitlichen Wand des Öl-Behälters (25) vorgesehen ist, wobei ein unteres Ende des Rahmens mit der Schallschutz-Bodenplatte (113) in Eingriff steht, um eine Unterseite des Motorraums abzudecken, wobei die Einlaß-Öffnung (23) zwischen einer seitlichen Wand des oberen Endes des Rahmens und einer seitlichen Wand (268) des Öl-Behälters gebildet ist, und wobei Luft-Durchführungen zwischen der Seite und der Unterseite des Öl-Behälters und dem Rahmen gebildet sind.

17. Gabelstapler nach Anspruch 1, wobei die Schallschutz-Bodenplatte (113) an dem Öl-Behälter (25) befestigt ist, um einen unteren Teil des Motorraums abzudecken.

18. Gabelstapler nach Anspruch 2, wobei eine obere Wandfläche der Karosserie-Platte (121) in Kontakt mit einer Motorhaube (93) ist.

19. Gabelstapler nach Anspruch 1, wobei eine Kühlrippe (268) an dem Öl-Behälter (26) befestigt ist.

## Revendications

1. Chariot à fourches présentant un compartiment moteur (10, 20) qui est disposé dans un châssis (11, 21) de carrosserie et dans lequel un réservoir d'huile (111, 25, 26) est logé sur le côté de celui-ci, ledit compartiment moteur (10, 20) comprenant :
un orifice d'entrée (14, 15) formé dans ledit côté de la carrosserie destiné à admettre l'air extérieur,
un passage d'air (150, 241) formé entre ledit orifice d'entrée (14, 15, 23) et ledit compartiment moteur (10, 20) par lequel l'air extérieur pénètre dans ledit compartiment moteur (10, 20), dans lequel une surface d'une paroi intérieure dudit passage d'air (150, 241) est formé par une surface d'une paroi extérieure dudit réservoir d'huile (111, 25, 26), et
une plaque de fond anti-bruit (113) destinée à protéger une partie formant fond dudit compartiment moteur (10, 20),
caractérisé en ce que la plaque de fond anti-bruit (113) s'étend jusqu'à une paroi latérale dudit réservoir d'huile (111, 25, 26) le long d'une partie formant fond de celui-ci afin de former un nouveau passage d'air (140) entre les deux ; et/ou
une paroi latérale dudit réservoir d'huile (111, 25, 26) qui n'est pas disposée pour former une surface d'une paroi intérieure desdits passages d'air (140, 150, 241) mais pour former une partie dudit châssis de carrosserie (11, 21) et qui est exposée à l'air extérieur.

2. Chariot à fourches selon la revendication 1, dans lequel un panneau de carrosserie (121) est disposé au-dessus dudit réservoir d'huile (111) le long d'une surface latérale de la carrosserie du chariot afin de former ledit passage d'air (150) entre un bord inférieur dudit panneau de carrosserie et ledit réservoir d'huile.

3. Chariot à fourches selon la revendication 1, dans lequel ledit réservoir d'huile (25) est abrité dans ledit châssis (21) et un panneau de carrosserie (22) disposé le long d'un côté dudit châssis de la carrosserie, et ledit orifice d'entrée (23) est formé entre ledit panneau de carrosserie et le châssis, et communique avec ledit passage d'air (241) formé entre ledit panneau de carrosserie et ledit réservoir d'huile.

4. Chariot à fourches selon la revendication 1, dans lequel un panneau de carrosserie (22) est disposé le long d'une paroi latérale dudit réservoir d'huile (25) pour former ledit passage d'air (241) entre ceux-ci.

5. Chariot à fourches selon la revendication 4, dans lequel ledit panneau de carrosserie (22) est formé présenter des ondulations s'étendant dans la direction verticale afin de fournir des parties en creux (220) et des parties faisant saillie (221).

6. Chariot à fourches selon la revendication 4, dans lequel ledit panneau de carrosserie (22) s'étend jusqu'à un bord inférieur d'une paroi latérale dudit réservoir d'huile (25).

7. Chariot à fourches selon la revendication 4, dans lequel une pluralité de cloisons (31, 33) sont fixées sur une face arrière dudit panneau de carrosserie (22) qui fait face audit réservoir d'huile afin de former ledit passage d'air (241) entre lesdits cloisons, panneau de carrosserie et réservoir d'huile.

8. Chariot à fourches selon la revendication 7, dans lequel lesdites cloisons sont disposées de façon que la largeur des orifices (A1-A4) définis entre les cloisons adjacentes (31) soit différente.

9. Chariot à fourches selon la revendication 7, dans lequel lesdites cloisons (33) sont incurvées et sont partiellement alignées avec ledit châssis de carrosserie dans une direction longitudinale.

10. Chariot à fourches selon la revendication 7, dans lequel lesdites cloisons (33) sont ondulées.

11. Chariot à fourches selon la revendication 4, dans lequel une pluralité de cloisons (36 ; 37) sont fixées sur une paroi latérale dudit réservoir d'huile qui fait face audit panneau de carrosserie (22) afin de former ledit passage d'air entre ceux-ci.

12. Chariot à fourches selon la revendication 11, dans lequel lesdites cloisons (36) sont disposées de telle façon que la largeur des orifices définis entre les cloisons adjacentes diffère l'une par rapport à l'autre.

13. Chariot à fourches selon la revendication 11, dans lequel lesdites cloisons (37) sont incurvées et partiellement alignées avec ledit châssis de la carrosserie de véhicule dans une direction longitudinale.

14. Chariot à fourches selon la revendication 11, dans lequel lesdites cloisons (37) sont incurvées.

15. Chariot à fourches selon la revendication 1, dans lequel ledit châssis de la carrosserie (21) s'étend au-delà de la hauteur dudit réservoir d'huile (25), par un châssis inférieur et engagé sur ladite plaque de fond anti-bruit (113) afin de protéger un fond dudit compartiment moteur et avec une extrémité supérieure dudit châssis qui s'étend jusqu'à une paroi latérale d'un capot de moteur (93) protégeant ledit compartiment moteur, ledit orifice d'entrée (23) étant formé entre ledit capot de moteur et ledit châssis, et lesdits passages d'air formés entre une paroi latérale et un fond dudit réservoir d'huile et dudit châssis.

16. Chariot à fourches selon la revendication 1, dans lequel ledit châssis de carrosserie (21) est muni le long d'un fond et d'une paroi latérale dudit réservoir d'huile (25) d'une extrémité de châssis inférieure engagée sur ladite plaque de fond anti-bruit (113) afin de protéger un fond dudit compartiment moteur, ledit orifice d'entrée (23) étant formé entre une paroi latérale de l'extrémité supérieure dudit châssis et une paroi latérale (268) dudit réservoir d'huile, et les passages d'air étant formés entre ladite paroi et le fond dudit réservoir d'huile et ledit châssis.

17. Chariot à fourches selon la revendication 1, dans lequel ladite plaque de fond anti-bruit (113) est fixée sur ledit réservoir d'huile (25) afin de protéger une partie formant un fond dudit compartiment moteur.

18. Chariot à fourches selon la revendication 2, dans lequel une face de la paroi supérieure dudit panneau de carrosserie (121) est en contact avec un capot de moteur (93).

19. Chariot à fourches selon la revendication 1, dans lequel une ailette de refroidissement (268) est fixée sur ledit réservoir d'huile (26).
